# EUROPÄISCHE PATENTSCHRIFT

(11) **EP 2 342 119 B1**
(45) Veröffentlichungstag und Bekanntmachung des Hinweises auf die Patenterteilung: **19.09.2012**
(21) Anmeldenummer: 09777018.4
(22) Anmeldetag: 08.07.2009
(51) Int. Cl.: B62D 7/00, B62D 9/00, B62D 17/00

(54) **KRAFTFAHRZEUG-RADAUFHÄNGUNG**
MOTOR VEHICLE WHEEL SUSPENSION
SUSPENSION POUR VÉHICULE AUTOMOBILE

(30) Priorität: 23.09.2008 DE 102008048569
(43) Veröffentlichungstag der Anmeldung: 13.07.2011
(73) Patentinhaber: Audi AG, 85045 Ingolstadt (DE)
(72) Erfinder: SCHMID, Wolfgang, 85354 Freising (DE); MEITINGER, Karl-Heinz, 81667 München (DE); MICHEL, Wilfried, 93339 Riedenburg (DE); KOSSIRA, Christoph, 85053 Ingolstadt (DE); MÜLLER, Hugo, 86701 Rohrenfels-Ballersdorf (DE)
(74) Vertreter: Asch, Konrad
(86) Internationale Anmeldenummer: PCT/EP2009/004918
(87) Internationale Veröffentlichungsnummer: WO 2010/034368

(56) Entgegenhaltungen:
- EP-A1- 2 241 462
- WO-A-89/08566
- WO-A1-2008/071153
- DE-A1-102008 011 367
- JP-A- 2 099 469
- US-A- 3 833 235
- US-A1- 2005 280 241

## Beschreibung

Die Erfindung betrifft eine Radaufhängung für Kraftfahrzeuge nach dem Oberbegriff des Patentanspruches 1.

Bei aktiven Lenksystemen, insbesondere für die Hinterachse von Fahrzeugen kann der Radsturz bzw. die Radspur über ein Stellglieds eingestellt werden, so dass durch Steuerung des Stellglieds aktiv auf das Fahrverhalten des Kraftfahrzeugs Einfluss genommen werden kann.

Aus der DE 39 28 135 A1 ist eine Radaufhängung für Kraftfahrzeuge bekannt. Der Radträger der Radaufhängung weist ein radseitiges, das Fahrzeugrad drehbar lagerndes Tragelement sowie ein achsseitiges Tragelement auf, zwischen denen als ein Zwischenelement ein Stellglied geschaltet ist. Das Stellglied ist hier ein hydraulischer Stellzylinder, der einerseits an einer Lagerkonsole des Radträgers abgestützt ist und andererseits mit seiner Kolbenstange gegen einen äußeren Wälzlager-Laufring eines Radlagers drückt, wodurch das Radlager zusammen mit dem Fahrzeugrad eine Schwenkbewegung um einen zentralen Gelenkmittelpunkt ausführt, um einen Vor- bzw. Nachspurwinkel oder einen Sturzwinkel des betreffenden Fahrzeugrades zu ändern.

Die aus der DE 39 28 135 A1 bekannte Anordnung des Stellglieds zwischen der Lagerkonsole und dem Radlager ist bauraumintensiv und konstruktiv aufwendig mit entsprechend hohem Gewicht gestaltet. Das insgesamt hohe Gewicht der Radaufhängung ist besonders nachteilig, da es sich beim Radträger um eine ungefederte Masse handelt. Außerdem sind die in den Lagerstellen zwischen den Tragelementen und dem Zwischenelement vorgesehenen Lager so konfiguriert, dass sie nicht nur Axialdruckkräfte, sondern auch Axialzugkräfte sowie Radialkräfte aufnehmen können. Derart ausgelegte Lager weisen bei den eingeschränkten Bauraumverhältnissen im Bereich des Radträgers übermäßig große Bauvolumina auf.

Aus der WO 89/08566 A ist eine gattungsgemäße Radaufhängung für ein Kraftfahrzeug bekannt. Die Radaufhängung weist eine starre, angetriebene Lenkachse mit Radnabengetrieben und mit einem Achskörper auf, an dessen Ende nach außen weisende Lagerbolzen vorgesehen sind. An den Lagerbolzen sind mittels Kegelrollenlager Radnabenträger um eine zur Radebene geneigte Achse schwenkbar angelenkt. Aus der US 2005/280241 A1 ist ebenfalls eine Radaufhängung für ein Kraftfahrzeug bekannt, dass ein Stellglied zur Einstellung eines Spur- und/oder Sturzwinkels aufweist. Gleiches gilt auch für die aus der EP 2 098 386 A1 bekannte Radaufhängung. Aus der JP 02 099 469 A ist eine weitere Radaufhängung bekannt, bei der ein Stellglied zur Einstellung eines Spur- und/oder Sturzwinkels des Fahrzeugrades vorgesehen ist.

Die Aufgabe der Erfindung besteht darin, eine Radaufhängung mit einem aktiven Lenksystem bereitzustellen, das konstruktiv einfach und bauraumgünstig in der Radaufhängung angeordnet ist.

Die Aufgabe ist durch die Merkmale des Patentanspruches 1 gelöst. Vorteilhafte Weiterbildungen der Erfindung sind in den Unteransprüchen offenbart.

Gemäß dem kennzeichnenden Teil des Patentanspruches 1 weist die Radaufhängung ein Vorspannmittel auf, das das radseitige Tragelement und das achsseitige Tragelement mit einer Vorspannkraft zueinander in Anlage drückt. Durch die Verspannung der beiden Tragelemente werden die Lagerstellen in der Radaufhängung nur auf Axialdruckkräfte und Radialkräfte beansprucht. Axialzugkräfte werden dagegen durch das Vorspannmittel selbst aufgenommen. Dadurch können in der erfindungsgemäßen Radaufhängung einfache Axiallager mit entsprechend reduziertem Bauraum eingesetzt werden.

Montagetechnisch günstig ist es, wenn die Tragelemente und das Stellglied in der Wirkrichtung der Vorspannkraft in Steckverbindung miteinander verbunden sind, ohne dass eine hinterschneidende Konstruktion zur axialen Fixierung der Tragelemente erforderlich ist. Die Tragelemente und das Stellglied können daher beim Zusammenbau einfach ineinander gesteckt werden. Aus baulichen Gründen ist es bevorzugt, wenn das Vorspannmittel zwischen den beiden Tragelementen geschaltet ist und diese miteinander verbindet. Das Vorspannmittel ist dabei bevorzugt radial außerhalb des Stellglieds angeordnet und von diesem funktionell entkoppelt.

Besonders bevorzugt ist es, wenn das Vorspannmittel als eine zwischen dem radseitigen Tragelement und dem achsseitigen Tragelement geschaltete Kupplung ausgebildet ist. Die Kupplung kann als Drehmomentbrücke ein Drehmoment, etwa ein Bremsmoment, vom radseitigen Tragelement auf das achsseitige Tragelement, und damit zum Fahrzeugaufbau, übertragen. Dadurch wird mit der zusätzlichen Kupplung ein weiterer Kräfte- und Momentenpfad - neben dem Zwischenelement - bereitgestellt, über den das Bremsmoment zuverlässig auf den Fahrzeugaufbau übertragen werden kann.

Das Vorspannmittel kann vorzugsweise funktionell vollständig entkoppelt vom, zwischen den Tragelementen geschalteten Stellglied bzw. dessen Drehteilen sein. Auf diese Weise wird weder das Vorspannmittel noch das Stellglied vom jeweils anderen Bauteil funktionell beeinflusst.

Das Vorspannmittel kann bevorzugt verdrehsteif bzw. torsionssteif sein, um die Drehmomentübertragung zu gewährleisten. Außerdem kann das Vorspannmittel ausreichend elastisch und/oder nachgiebig gestaltet sein, um eine Auslenkung des radseitigen Tragelements gegenüber dem achsseitigen Tragelement ausgleichen zu können.

Vor diesem Hintergrund kann das Vorspannmittel ein Kardangelenk sein, das zwischen das radseitige und das achsseitige Tragelement geschaltet ist. Für eine bauraumreduzierte Ausführung kann das Kardangelenk ein, bevorzugt radial außerhalb des Stellglieds angeordnetes Gelenkteil, etwa ein Ringelement, aufweisen, das sich mit einem Radialabstand um das Stellglied erstreckt. Außerdem kann das Kardangelenk mit den Tragelementen verbundene Stege aufweisen, die nach Art einer Gelenkgabel wiederum über Drehachsen gelenkig am Ringelement angelenkt sind. Auf diese Weise erfolgt mittels des Kardangelenkes eine torsionsteife sowie spielfreie Drehmomentübertragung zwischen den beiden Tragelementen des Radträgers.

Die Beaufschlagung des Kardangelenks mit der Vorspannkraft kann während des Zusammenbaus erfolgen. Hierzu können die Gelenkteile unter Zugbelastung miteinander gekoppelt werden.

Das Stellglied weist ein radseitiges Drehteil und ein achsseitige Drehteil auf, die zwischen dem radseitigen Tragelement und dem achsseitigen Tragelement angeordnet sind und um ihre Drehachsen zueinander verdrehbar sind. Dabei kann das radseitige Drehteil durch Verdrehen der beiden Drehteile zueinander um einen Schwenkwinkel gegenüber dem achsseitigen Drehteil ausgelenkt werden. Entsprechend wird daher auch das am radseitigen Tragelement vorgesehene Fahrzeugrad um einen Spur- und/oder Sturzwinkel verschwenkt. Im Unterschied zum Stand der Technik erfolgt daher eine Winkelverstellung des radseitigen Tragelements durch eine Drehbetätigung eines der Drehteile bzw. der beiden Drehteile des Stellglieds, und nicht durch eine Linear-Hubbewegung eines hydraulischen Stellzylinders, der gegen das radseitige Lagerelement drückt. Die Winkelverstellung kann durch gegensinnige oder gleichsinnige Drehbetätigung beider Drehteile bzw. auch durch Drehung eines der beiden Drehteile erfolgen, während das andere Drehteil nicht um seine Achse rotiert.

Erfindungsgemäß kann das radseitige Drehteil mit seiner Mittelachse nach Art einer Taumelbewegung um seine Drehachse bewegt werden. Hierzu kann die Drehachse des radseitigen Drehteils um einen Winkel gegenüber der Drehachse des achsseitigen Drehteils schräggestellt sein. Bei der Taumelbewegung des radseitigen Drehteiles können die beiden Drehteile über Lagerstellen in Anlage, vorzugsweise in Wälzkontakt sein, die wiederum in einer Drehebene liegen. Die Drehebene ist dabei senkrecht zur Drehachse des radseitigen Drehteils ausgerichtet. Auf diese Weise kann sich das radseitige Drehteil mit zugehörigem radseitigen Tragelement für das Fahrzeugrad in einer Taumelbewegung um seine Drehachse bewegen. Dabei ändert sich der Schwenkwinkel zwischen dem radseitigen Drehteil und dem achsseitigen Drehteil in Abhängigkeit von dem Drehwinkel des radseitigen Drehteils.

Durch eine gleichzeitig oder zeitlich versetzt erfolgende Drehung des achsseitigen Drehteils gegenüber dem achsseitigen Tragelement kann die räumliche Ausrichtung der von den beiden Drehteilen gebildeten Winkelanordnung verändert werden.

Für eine in Fahrzeugquerrichtung kompakte Bauweise der Radaufhängung können die beiden Drehteile ineinander verschachtelt angeordnet sein. Bevorzugt kann eines der beiden Drehteile, etwa das radseitige Drehteil, als ein topfförmiges Hohlprofilteil ausgeführt sein, in dem das achsseitige Drehteil vorgesehen ist. Der Boden des topfförmigen Drehteils kann in diesem Fall als schräggestellte Steuerfläche gestaltet sein, die mit der Steuerfläche des achsseitigen Drehteils in Anlage ist.

Zusätzlich kann auch zumindest eines der Tragelemente als topfförmiges Hohlprofilteil mit einer Umfangswand ausgeführt sein, die einen Montageraum begrenzt, in dem das erfindungsgemäße Stellglied angeordnet ist. Für eine stabile Drehlagerung können die Drehteile an der Umfangswand des topfförmigen Tragelements abgestützt sein. Bei der oben beschriebenen ineinander verschachtelten Drehteil-Anordnung kann dabei lediglich das radial äußere Drehteil an der Umfangswand des topfförmigen Tragelements abgestützt sein.

Bevorzugt können die beiden Drehteile als Hohlzylinder ausgebildet sein. Deren zylindrischer Innenraum kann als Bauraum für die Stellantriebe dienen. Alternativ kann durch den Innenraum der Drehteile auch eine Gelenkwelle zum Antrieb des Fahrzeugrades geführt werden.

Die Anordnung der Stellantriebe innerhalb der hohlzylindrischen Drehteile ist insbesondere bevorzugt, wenn das Fahrzeugrad geschleppt wird, also nicht durch eine Gelenkwelle angetrieben wird. In diesem Fall ist der Hohlraum der Drehteile leer. Es können daher ohne weiteres die Stellantriebe darin vorgesehen werden.

Bei Verwendung einer, durch den Hohlraum der Drehteile geführten Gelenkwelle kann es aufgrund des begrenzten Bauraums erforderlich sein, die Stellantriebe außerhalb der beiden hohlzylindrischen Drehteile anzuordnen. In diesem Fall kann an jedem der Drehteile außenumfangsseitig jeweils eine Getriebestufe, etwa eine Stirnradstufe oder dergleichen, vorgesehen sein. Die damit trieblich verbundenen Stellantriebe können bauraumgünstig außerhalb des Radträgers in dafür vorgesehenen Freiräumen integrierbar sein.

Eine solche Anordnung der Getriebestufen sowie der zugehörigen Stellantriebe außerhalb der Drehteile ist jedoch hinsichtlich der Verwendung eines Metallbalges als Kupplungselement problematisch. Die jeweilige Getriebestufe bzw. der zugehörige Stellantrieb müsste nämlich durch den Metallbalg hindurch geführt werden, wodurch die Funktionsfähigkeit des Metallbalges reduziert wird. Wird nämlich eine solche Getriebedurchführung in den Metallbalg integriert, so sinkt das vom Metallbalg übertragbare Drehmoment aufgrund des Flächenträgheitsmomentes an dieser Stelle. Zum Ausgleich müsste der Durchmesser des Metallbalges stark erhöht werden.

Bevorzugt sind die oben genannten radseitigen und achsseitigen Stege des Kardangelenks unter Bildung von Freiräumen zueinander winkelversetzt angeordnet. In diese Freiräume kann bauraumgünstig jeweils zumindest teilweise ein Stellantrieb angeordnet oder alternativ die außenseitig am Drehteil angeordnete Getriebestufe vorgesehen werden.

Die Mitte des Kardangelenkes liegt gemäß einer Ausführung der Erfindung auf Höhe des Momentanpols des Radträgers, wodurch bei einer Verstellung des Radträgers keine Längenänderung auftritt.

Nachfolgend sind drei Ausführungsbeispiele der Erfindung anhand der beigefügten Figuren beschrieben.

Es zeigen:
- Fig. 1: in einer schematischen Prinzipdarstellung eine Radaufhängung an einer Fahrzeughinterachse gemäß dem ersten Ausführungsbeispiel;
- Fig. 2: in einer vergrößerten schematischen Teilschnittansicht die Radaufhängung in Alleinstellung;
- Fig. 3: eine Ansicht der Radaufhängung, die Schwenkbewegungen der beiden Drehteile zur Einstellung des Spur- oder Sturzwinkels veranschaulicht;
- Fig. 4: die Radaufhängung in einer Explosionsdarstellung;
- Fig. 5: die Radaufhängung gemäß dem zweiten Ausführungsbeispiel mit integriertem Kardangelenk; und
- Fig. 6: die Radaufhängung gemäß dem dritten Ausführungsbeispiel.

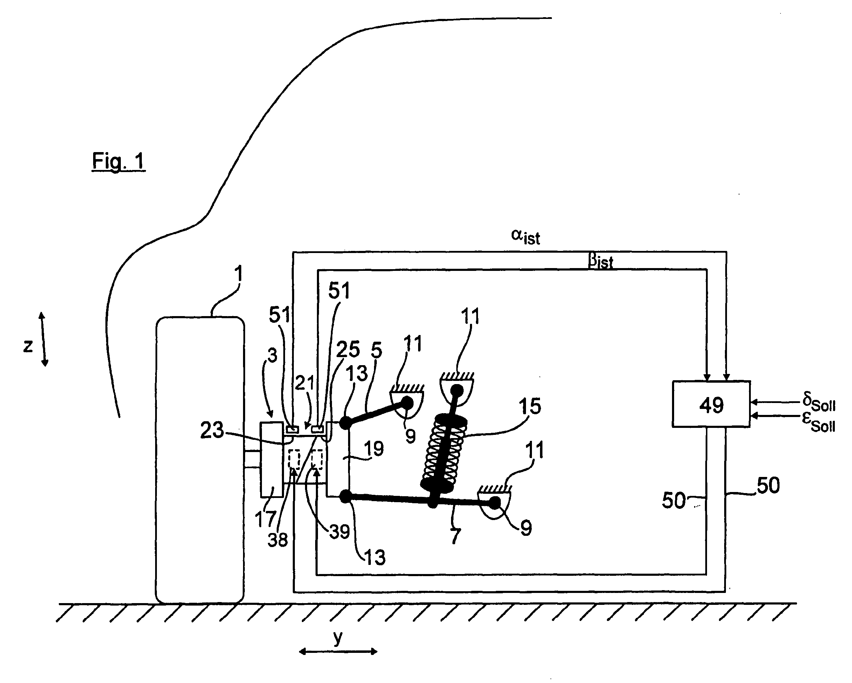

In der Fig. 1 ist eine Radaufhängung in Verbindung mit einer bekannten Querlenkerachse dargestellt, bei welcher ein das Fahrzeugrad 1 tragender Radträger 3 unter anderem mit Hilfe eines oberen Querlenkers 5 und eines unteren Querlenkers 7 über aufbauseitige Lenkerlager 9 schwenkbar am Fahrzeugaufbau 11 angebunden sind. Die aufbauseitigen Lenkerlager 9 sowie die radträgerseitigen Lenkerlager 13 sind von üblichem Aufbau. Zwischen dem unteren Querlenker 7 und dem Fahrzeugaufbau 11 ist außerdem in üblicher Weise eine Tragfeder 15 mit zugeordnetem Federbein abgestützt.

Abweichend von der gezeigten Querlenkerachse kann der Radträger 3 mit jeder beliebigen Achse kombiniert werden, etwa einer Starrachse, einer Verbundlenkerachse, einer Mehrlenkerachse, etc.

Gemäß der **Fig. 1** weist der Radträger 3 ein radseitiges Tragelement 17 sowie ein achsseitiges Tragelement 19 auf. Am radseitigen Tragelement 17 ist das Fahrzeugrad 1 über eine Radnabe in einem nicht dargestellten Radlager des radseitigen Tragelements 17 gelagert. Außerdem kann am radseitigen Tragelement 17 die Bremsanlage in üblicher Weise angebracht sein. Am achsseitigen Tragelement 19 sind die beiden Querlenker 5, 7 über die Lenkerlager 13 angebunden.

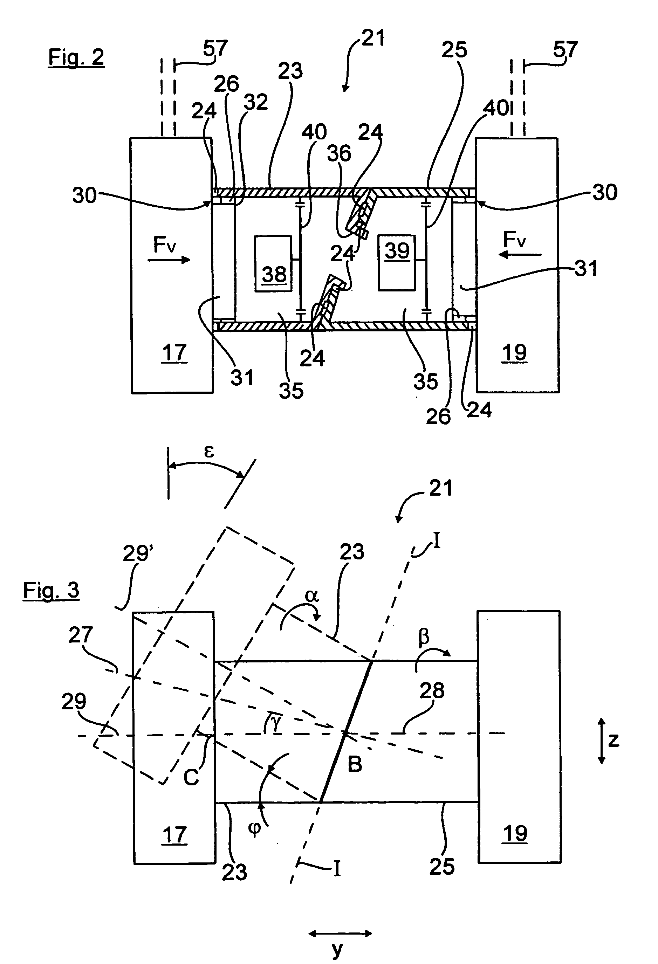

Zwischen den beiden Tragelementen 17, 19 ist als ein Zwischenelement ein Stellglied 21 vorgesehen, das ein radseitiges Drehteil 23 und ein achsseitiges Drehteil 25 aufweist. Wie aus der **Fig. 2** hervorgeht, sind die beiden Drehteile 23 und 25 an ihren schräggestellten Steuerseiten unter Zwischenschaltung von Axiallagern 24 miteinander in Anlage. Weitere Axiallager 24 sind zwischen den, von den Steuerseiten der Drehteile 23, 25 abgewandten Stirnseiten der Drehteile 23, 25 und den Tragelementen 17, 19 vorgesehen.

Wie aus der **Fig. 2** weiter hervorgeht, ist an der Steuerseite des Drehteils 23 ein zentraler Ringflansch 36 angeformt. Der Ringflansch 36 ragt durch eine Montageöffnung in der gegenüberliegenden Steuerseite des achsseitigen Drehteils 25. Zwischen dem Ringflansch 36 und dem Öffnungsrand des achsseitigen Drehteils 25 ist ein Radiallager 26 vorgesehen. Die Drehteile 23, 25 sind an ihren von den Steuerseiten abgewandten Stirnseiten ebenfalls über Radiallager 26 auf Achsvorsprünge 31 der Tragelemente 17, 19 abgestützt, die jeweils in den Hohlraum der Drehteile 23, 25 einragen.

Die Drehteile 23, 25 sind gemäß der **Fig. 3** jeweils um ihre Drehachsen 27, 28 drehbar zwischen den beiden Tragelementen 17, 19 gelagert. Die Drehachse 28 des Drehteils 25 ist in Fahrzeugquerrichtung y axial ausgerichtet sowie koaxial zur Mittelachse 29 des Drehteils 23. Die Drehachse 27 des Drehteils 23 ist um einen Neigungswinkel γ nach oben geneigt. Bei einem Drehantrieb des Drehteils 23 um einen Drehwinkel α bewegt sich das Drehteil 23 mit seiner Mittelachse 29 in einer Taumelbewegung mit veränderlichem Schwenkwinkel ϕ um die Drehachse 27.

In der **Fig. 3** ist das Drehteil 23 mit durchgezogener Linie in seiner Ausgangslage bei einem Drehwinkel α=0 gezeigt, in der die Mittelachse 29 des Drehteils 23 koaxial zur Drehachse 28 des Drehteils 25 ausgerichtet ist. In diesem Fall liegt der Sturzwinkel ε in der dargestellten yz-Ebene des Fahrzeugrads 1 bei 0.

Außerdem ist in der **Fig. 3** in gestrichelten Linien das Drehteil 23 beispielhaft in einer Drehlage bei einem Drehwinkel α=180° gezeigt. In dieser Drehlage ist das Drehteil 23 mit seiner Mittelachse 29' in einer Taumelbewegung um die Drehachse 27 nach oben bewegt. Dadurch ergibt sich ein Schwenkwinkel ϕ zwischen den beiden Drehteilen 23 und 25. Entsprechend ist auch das Fahrzeugrad 1 bzw. das radseitige Tragelement 17 um den Sturzwinkel ε in der yz-Ebene geschwenkt.

Gleichzeitig mit der Drehung des Drehteils 23 oder zeitlich versetzt dazu kann auch das Drehteil 25 um einen Drehwinkel β gegenüber dem achsseitigen Tragelement 19 gedreht werden. Dadurch wird das in der **Fig. 3** gezeigte, gegenüber dem achsseitigen Drehteil 25 abgewinkelte Drehteil 23 aus der yz-Ebene heraus geschwenkt, wodurch der Spurwinkel δ des Fahrzeugrads 1 einstellbar ist. Bereits bei einer alleinigen Drehung des Drehteils 23 um einen Drehwinkel α kann das Drehteil 23 aus der yz-Ebene schwenken.

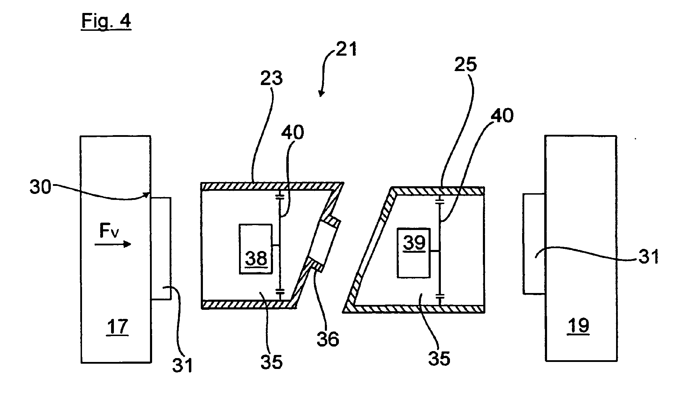

In der **Fig. 4** ist die Radaufhängung der **Fig. 2** in einer Explosionsdarstellung gezeigt, um einen Zusammenbau der Radaufhängung zu veranschaulichen. Bei der Montage wird das radseitige Tragelement 17 mit seinem Achsvorsprung 31 unter Zwischenschaltung der hier nicht gezeigten Radial- und Axiallager 24, 26 in die offene Stirnseite des Drehteils 23 eingesteckt. Der an der Steuerseite des Drehteils 23 vorgesehene Ringflansch 36 wird ebenfalls in Axialrichtung in die korrespondierende Montageöffnung des Drehteils 25 eingesteckt. Das Tragelement 19 wird mit seinem Achsvorsprung 31 in den Hohlraum des Drehteiles 25 eingesteckt, und zwar ebenfalls unter Zwischenschaltung der Radial- und Axiallager 24, 26.

Die Bauteile der Radaufhängung sind daher montagetechnisch einfach in Steckverbindung zu montieren, ohne dass eine in Axialrichtung wirkende Hinterschneidung an den Verbindungsstellen erforderlich ist. Für eine betriebssichere Kopplung der Bauteile der Radaufhängung in der Axialrichtung ist ein zusätzliches Vorspannmittel 57 vorgesehen das in der **Fig. 2** lediglich gestrichelt angedeutet ist. Das Vorspannmittel 57 übt in der Axialrichtung eine Vorspannkraft Fᵥ auf die Tragelemente 17, 19 mit den zwischengeschalteten Drehteilen 23, 25 aus.

Das Vorspannmittel 57 ist funktionell vollständig entkoppelt von dem Zwischenglied 21 und bewirkt eine axiale Fixierung der Bauteile der Radaufhängung. Eine Kopplung der Tragelemente 17, 19 mit den Drehteilen 23, 25 bzw. eine Kopplung zwischen den beiden Drehteilen 23, 25 durch eine aufwendige hinterschneidende Konstruktion ist damit vermieden.

Aufgrund der axialen Fixierung der Tragelemente 17, 19 können einfache Axial- und Radial-Nadellagerverbände verwendet werden, die sehr klein dimensionierbar sind und sehr große Kräfte aufnehmen können.

Im Vergleich zum erfindungsgemäßen Aufbau sind bei einer Hinterschnittkopplung zwischen den Tragelementen 17, 19 und den Drehteilen 23, 25 die Lagerstellen nicht nur auf Druck- sondern auch auf Zugbelastungen auszulegen. Derart ausgelegte Lager sind beispielsweise angestellte Lagerpaare in X- oder O-Anordnung mit Kegelrollenlager. Solche doppelreihigen Lagerverbände sind aufgrund der doppelten Lageranzahl in einer Bautiefenrichtung groß zu dimensionieren, was angesichts der eingeschränkten Bauraumverhältnisse in der Radaufhängung von Nachteil ist.

In den Hohlräumen 35 der beiden Drehteile 23, 25 sind Drehmotoren 38, 39 angeordnet, die über einen Getriebezug 40 mit einer Innenverzahnung des jeweiligen Drehteils 23, 25 kämmen.

Zur aktiven Spur- und Sturzverstellung werden gemäß der **Fig. 1** von einem nicht dargestellten übergeordneten Steuergerät auf der Grundlage unterschiedlicher Fahrzeugparameter die Soll-Werte δₛₒₗₗ und εₛₒₗₗ für die Spur- und Sturzwinkel berechnet und zu einer Regelungseinrichtung 49 geleitet. Die Regelungseinrichtung 49 ist über Signalleitungen 50 mit den Drehmotoren 38, 39 der beiden Drehteile 23, 25 ansteuerbar, die die jeweiligen Drehteile 23, 25 über einen Drehwinkel α oder einen Drehwinkel β drehen. Wie in der **Fig. 1** angedeutet, sind beiden Drehteilen 23, 25 Winkelgeber 51 zugeordnet, die jeweils einen Ist-Wert αᵢₛₜ und βᵢₛₜ der beiden Drehteile 23, 25 erfassen und zur die Regelungseinrichtung 49 rückführen.

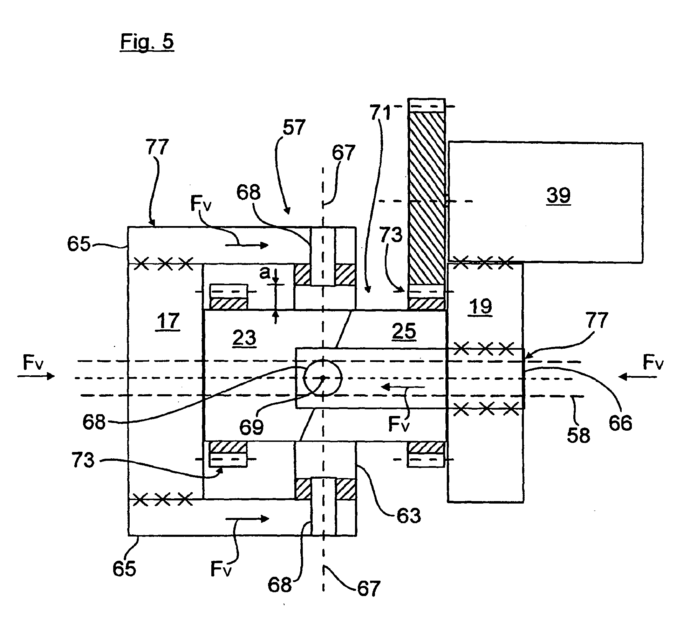

Im zweiten Ausführungsbeispiel gemäß der **Fig. 5** ist das Vorspannmittel als ein Kardangelenk 57 ausgeführt, das zwischen dem radseitigen Tragelement 17 und dem achsseitigen Tragelement 19 geschaltet ist.

Das in der **Fig. 5** gezeigte Ausführungsbeispiel stimmt vom grundsätzlichen Aufbau mit dem vorangegangenen Ausführungsbeispiel überein. Insofern wird auf dessen Beschreibung Bezug genommen. Im Unterschied zu den vorangegangen Ausführungsbeispielen wird das am radseitigen Tragelement 17 gehalterte Fahrzeugrad 1 nicht geschleppt, das heißt nicht durch eine Gelenkwelle angetrieben, sondern ist zusätzlich eine in der **Fig. 5** gestrichelt angedeutete Gelenkwelle 58 vorgesehen.

Die Gelenkwelle 58 ist durch die Hohlräume 35 der beiden Drehteile 23, 25 geführt und treibt das Fahrzeugrad 1 an, wie es bei einem Hinterrad- oder Allradantrieb der Fall ist. Aus Platzgründen sind daher die beiden Stellantriebe 38, 39 (in der **Fig. 5** ist lediglich der Stellantrieb 39 gezeigt) nicht mehr innerhalb der Hohlräume 35 angeordnet, sondern außerhalb des Hohlraumes 35 der beiden Drehteile 23, 25 angeordnet. Die beiden Stellantriebe 38, 39 sind gemäß der **Fig. 5** dabei über außenumfangsseitig an den Drehteilen 23, 25 vorgesehenen Stirnradstufen 73 in Zahnverbindung.

Das Kardangelenk 57 ist hier nicht nur ein Vorspannmittel, das die Trageelemente 17, 19 mit einer Vorspannkraft Fᵥ in Anlage zueinander drückt. Das Kardangelenk 57 wirkt zusätzlich als eine Drehmomentbrücke, über die beispielsweise ein Bremsmoment vom radseitigen Tragelement 17 zum achsseitigen Tragelement 19 übertragen wird.

Das Kardangelenk 57 weist gemäß der **Fig. 5** als ein zentrales Gelenkteil einen im Halbschnitt gezeigten Kardanring 63 auf, der sich radial außerhalb um die Drehteile 23, 25 erstreckt und über einen Radialabstand a von den Drehteilen 23, 25 beabstandet ist. Der Kardanring 63 ist jeweils über eine Kardangelenkgabel 77 mit dem radseitigen Tragelement 17 und mit dem achsseitigen Tragelement 19 in Verbindung.

Die beiden Gelenkgabeln 77 weisen jeweils radseitige und achsseitige Stege 65, 66 auf. Die Stege 65, 66 sind einerseits in Festverbindung mit den Tragelementen 17, 19 und andererseits mittels Lagerzapfen 68, die die zueinander rechtwinkligen Drehachsen 67, 69 definieren, am Kardanring 63 angelenkt. Die radseitigen und achsseitigen Stege 65, 66 sind gemäß der **Fig. 5** zueinander um einen Winkel von 90° winkelversetzt, und zwar unter Bildung von Freiräumen 71. In diesen Freiräumen 71 kann bevorzugt zumindest teilweise die Getriebestufe 73 und/oder der jeweilige Drehmotor 38, 39 einragen.

Beim Zusammenbau der in der **Fig. 5** gezeigten Radaufhängung werden die Stege 65, 66 des Kardangelenkes 57 unter Zugbelastung mit ihren stirnseitigen Lageröffnungen auf die Lagerzapfen 68 des Kardanringes 63 aufgesetzt. Dadurch werden die Tragelemente 17, 19 zueinander mit der Vorspannkraft Fᵥ verspannt.

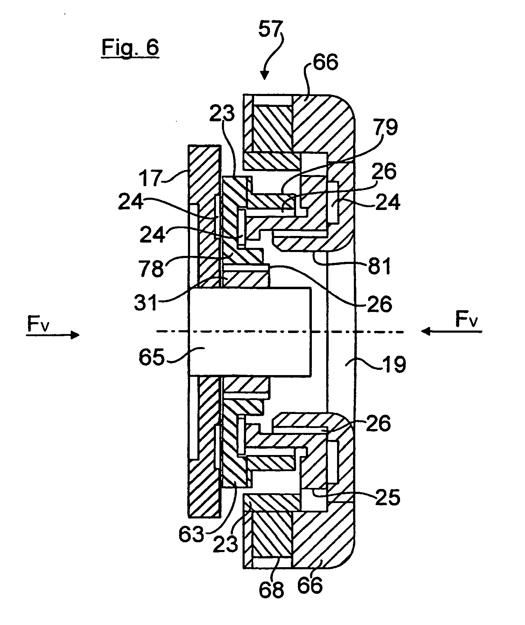

In der **Fig. 6** ist gemäß dem dritten Ausführungsbeispiel eine technische Umsetzung der in der **Fig. 5** gezeigten Radaufhängung dargestellt. Der Aufbau und die Funktionsweise der in den **Fig. 5** **und** **6** gezeigten Radaufhängungen sind im wesentlichen gleich. So weist die in der **Fig. 6** gezeigte Radaufhängung ebenfalls zwei rad- und achsseitige Tragelemente 17, 19 auf. Das radseitige Tragelement 17 ist mit dem zentralen Achsvorsprung 31 in einen Nabenabschnitt 78 des radseitigen Drehteils 23 eingesteckt. Der Nabenabschnitt 78 ist über einen Ringspalt radial von einer zylindrischen Außenwand 79 des Drehteils 23 beabstandet. In den Ringspalt zwischen der zylindrischen Außenwand 79 und dem Nabenabschnitt 78 ragt das hohlzylindrische Drehteil 25, dessen schräggestellte Stirnseite über das Axial-Nadellager 24 mit dem korrespondierenden Spalt-Grund des Drehteils 23 in Anlage ist. Das Drehteil 25 sitzt mit seinem Innenumfang unter Zwischenschaltung eines Radial-Nadellagers 26 auf einem Nabenabschnitt 81 des achseitigen Tragelements 19. Für eine leichtgängige Verstellbewegung der beiden Drehteile 23, 25 sind auch weitere Anlageflächen dieser Drehteile 23, 25 über Axial- und Radial-Nadellager 24, 26 abgestützt. Da gemäß der **Fig. 6** die Axial-Nadellager 24 lediglich auf Druckbeanspruchung, und nicht auch auf Zugbeanspruchung ausgelegt sind, können diese mit geringerer Bauhöhe gestaltet werden. Aufgrund der reduzierten Bauhöhe kann eine Überlappung einzelner Lager 24, 26 erfolgen, wodurch der axiale Bauraum weiter verkürzt werden kann.

Sowohl von dem radseitigen Tragelement 17 als auch vom achsseitigen Tragelement 19 überragen jeweils Kardangelenk-Stege 65, 66 die Drehteile 23, 25. Die Stege 65, 66 sind, wie bereits mit Bezug auf die **Fig. 5** erwähnt, unter axialer Vorspannung auf die Lagerbolzen 68 des Kardanringes 63 gesetzt, wodurch die Tragelemente 17, 19 unter Zwischenschaltung der beiden Drehteile 23, 25 mit der Vorspannkraft Fᵥ in Anlage gedrückt sind. Der Stellantrieb zur Drehverstellung der Drehteile 23, 25 ist in der **Fig. 6** nicht gezeigt. Dieser kann jedoch analog zu dem Stellantrieb gestaltet sein, wie er mit Bezug auf die **Fig. 5** erläutert ist.

## Patentansprüche

1. Radaufhängung für Kraftfahrzeuge, mit zumindest einem radseitigen, ein Fahrzeugrad (1) drehbar lagernden Tragelement (17) und zumindest einem achsseitigen Tragelement (19), wobei zwischen den Tragelementen (17, 19) ein Stellglied (21) zur Einstellung eines Spur- und/oder Sturzwinkels (δ, ε) des Fahrzeugrades (1) geschaltet ist, wobei das radseitige Tragelement (17) und das achsseitige Tragelement (19) durch ein Vorspannmittel (57) mit einer Vorspannkraft (Fᵥ) zueinander in Anlage gedrückt sind, **dadurch gekennzeichnet, dass** das Stellglied (21) ein radseitiges Drehteil (23) und ein achsseitiges Drehteil (25) aufweist, die um ihre in einem Winkel (γ) zueinander stehenden Drehachsen (27, 28) zueinander sowie mit Bezug auf die Tragelemente (17, 19) verdrehbar sind, und das radseitige Drehteil (23) beim Verdrehen der beiden Drehteile (23, 25) um den Schwenkwinkel (ϕ) gegenüber dem achsseitigen Drehteil (25) auslenkbar ist, wodurch der Spur- und/oder Sturzwinkel (δ, ε) des Fahrzeugrades (1) einstellbar ist.

2. Radaufhängung nach Anspruch 1, **dadurch gekennzeichnet, dass** die Tragelemente (17, 19) und das Stellglied (21) in der Wirkrichtung der Vorspannkraft (Fᵥ), insbesondere nach Art einer hinterschnittfreien Steckverbindung, miteinander verbunden sind.

3. Radaufhängung nach Anspruch 1 oder 2, **dadurch gekennzeichnet, dass** an Lagerstellen zwischen den Tragelementen (17, 19) und dem Stellglied (21) Axialdrucklager (24) vorgesehen sind, die die Vorspannkraft (Fᵥ) des Vorspannmittels (57) aufnehmen, und/oder Radiallager (26).

4. Radaufhängung nach Anspruch 1, 2 oder 3, **dadurch gekennzeichnet, dass** das Vorspannmittel (57) als Kupplung ausgebildet ist, die die beiden Tragelemente (17, 19) miteinander verbindet.

5. Radaufhängung nach einem der vorhergehenden Ansprüche, **dadurch gekennzeichnet, dass** das Vorspannmittel (57) ein Kardangelenk ist, das bevorzugt radial außerhalb des Zwischenelements (21) angeordnet ist.

6. Radaufhängung nach Anspruch 5, **dadurch gekennzeichnet, dass** das Kardangelenk (57) ein Grundelement (63), etwa ein Ringelement, und mit den Tragelementen (17, 19) verbundene radseitige und achsseitige Stege (65, 66) aufweist, die über Drehachsen (67, 69) gelenkig am Grundelement (63) angelenkt sind.

7. Radaufhängung nach Anspruch 6, **dadurch gekennzeichnet, dass** die Stege (65, 66) des Kardangelenks (57) unter Bildung der Vorspannkraft (Fᵥ) miteinander an den Drehachsen (67, 69) gekoppelt sind.

8. Radaufhängung nach Anspruch 6 oder 7, **dadurch gekennzeichnet, dass** die radseitigen Stege (65) und die achsseitigen Stege (66) unter Bildung von Freiräumen (71) zueinander winkelversetzt sind.

9. Radaufhängung nach einem der vorhergehenden Ansprüche, **dadurch gekennzeichnet, dass** die Lagerstellen zwischen den Drehteilen (23, 25) des Stellglieds (21) und/oder den Tragelementen (17, 19) vorgesehen sind.

10. Radaufhängung nach einem der Ansprüche 4 bis 9, **dadurch gekennzeichnet, dass** das Vorspannmittel (57) als ein Drehmomentbrücke ausgebildet ist, mit der zusätzlich ein Drehmoment, etwa ein Bremsmoment, vom radseitigen Tragelement (17) auf das achsseitige Tragelement (19) übertragbar ist.

11. Radaufhängung nach einem der vorhergehenden Ansprüche, **dadurch gekennzeichnet, dass** das Vorspannmittel (57) funktionell vom Stellglied (21) bzw. den Drehteilen (23, 25) derart entkoppelt ist, dass es über einen freien Abstand (a) vom Stellglied (21) beabstandet ist.

12. Radaufhängung nach einem der vorhergehenden Ansprüche, **dadurch gekennzeichnet, dass** das Vorspannmittel (57) verdrehsteif bzw. torsionssteif ist, wobei es die Auslenkung des radseitigen Drehteils (23) um den Schwenkwinkel (ϕ) gegenüber dem achsseitigen Drehteil (25) zulässt.

13. Radaufhängung nach einem der Ansprüche 9 bis 12, **dadurch gekennzeichnet, dass** die Drehachse (27) des radseitigen Drehteils (23) um einen Neigungswinkel (γ) gegenüber der Drehachse (28) des achsseitigen Drehteils (25) schräggestellt ist.

14. Radaufhängung nach einem der vorhergehenden Ansprüche, **dadurch gekennzeichnet, dass** das radseitige Drehteil (23) mit seiner Mittelachse (29, 29') in einer Taumelbewegung mit veränderlichem Schwenkwinkel (ϕ) um seine Drehachse (27) drehbar ist.

15. Radaufhängung nach einem der vorhergehenden Ansprüche, **dadurch gekennzeichnet, dass** durch Drehung des radseitigen Drehteils (23) um seine Drehachse (27) der Schwenkwinkel (ϕ) zwischen den Drehteilen (23, 25) eingestellt ist, und durch Drehung des achsseitigen Drehteils (25) gegenüber dem achsseitigen Tragelement (19) die räumliche Ausrichtung der aus beiden Drehteilen (23, 25) bestehenden Winkelanordnung festlegbar ist.

16. Radaufhängung nach einem der vorhergehenden Ansprüche, **dadurch gekennzeichnet, dass** die beiden Drehteile (23, 25) in Axialrichtung ineinander verschachtelt angeordnet sind, wobei insbesondere das achsseitige Drehteil (25) in einem Hohlraum (35) des radseitigen Drehteils (23) angeordnet ist.

## Claims

1. Wheel suspension for motor vehicles, comprising at least one wheel-side support member (17) which rotatably mounts one vehicle wheel (1) and at least one axle-side support member (19), an actuator (21) being connected between the support members (17, 19) for setting a trail angle and/or camber angle (δ, ε) of the vehicle wheel (1), the wheel-side support member (17) and the axle-side support member (19) being pressed into contact with each other by a pretensioning means (57) having a pretensioning force (Fᵥ), **characterised in that** the actuator (21) comprises a wheel-side rotary part (23) and an axle-side rotary part (25) which can be rotated about their axes of rotation (27, 28), which are at an angle (γ) to one another, and with respect to the support elements (17, 19), and the wheel-side rotary part (23) can be deflected when the two rotary parts (23, 25) are rotated by the swivel angle (ϕ) relative to the axle-side rotary part (25), as a result of which the track angle and/or camber angle (δ, ε) of the vehicle wheel (1) can be set.

2. Wheel suspension according to claim 1, **characterised in that** the support members (17, 19) and the actuator (21) are interconnected in the direction of action of the pretensioning force (Fᵥ), in particular in the manner of a plug connection without an undercut.

3. Wheel suspension according to either claim 1 or claim 2, **characterised in that** axial compression bearings (24) are provided at the bearings between the support members (17, 19) and the actuator (21) and accommodate the pretensioning force (Fᵥ) of the pretensioning means (57), and/or radial bearings (26).

4. Wheel suspension according to any of claims 1, 2 or 3, **characterised in that** the pretensioning means (57) is configured as a coupling which interconnects the two support members (17, 19).

5. Wheel suspension according to any of the preceding claims, **characterised in that** the pretensioning means (57) is a universal joint which is preferably arranged radially outside the intermediate element (21).

6. Wheel suspension according to claim 5, **characterised in that** the universal joint (57) is a base element (63), for example a ring element, and comprises wheel-side and axle-side webs (65, 66) which are connected to the support members (17, 19) and are articulated to the base element (63) by means of axes of rotation (67, 69).

7. Wheel suspension according to claim 6, **characterised in that** the webs (65, 66) of the universal joint (57) are coupled to each other on the axes of rotation (67, 69) with the formation of a pretensioning force (Fᵥ).

8. Wheel suspension according to either claim 6 or claim 7, **characterised in that** the wheel-side webs (65) and the axle-side webs (66) are angularly offset from one another with the formation of free spaces (71).

9. Wheel suspension according to any of the preceding claims, **characterised in that** bearings are provided between the rotary parts (23, 25) of the actuator (21) and/or the support members (17, 19).

10. Wheel suspension according to any of claims 4 to 9, **characterised in that** the pretensioning means (57) is designed as a torque bridge by means of which torque, for example a braking moment, can additionally be transmitted from the wheel-side support member (17) to the axle-side support member (19).

11. Wheel suspension according to any of the preceding claims, **characterised in that** the pretensioning means (57) is functionally decoupled from the actuator (21) or the rotary parts (23, 25) in such a way that it is spaced apart from the actuator (21) over a clear distance (a).

12. Wheel suspension according to any of claims 9 to 12, **characterised in that** the pretensioning means (57) is torsionally stiff, allowing the deflection of the wheel-side rotary part (23) by the swivel angle (ϕ) relative to the axle-side rotary part (25).

13. Wheel suspension according to any of claims 9 to 12, **characterised in that** the axis of rotation (27) of the wheel-side rotary part (23) is tilted by an angle of inclination (γ) relative to the axis of rotation (28) of the axle-side rotary part (25).

14. Wheel suspension according to any of the preceding claims, **characterised in that** the wheel-side rotary part (23) can be rotated by means of its centre axis (29, 29') in a wobbling motion at a variable swivel angle (ϕ) about the axis of rotation (27) thereof.

15. Wheel suspension according to any of the preceding claims, **characterised in that** by rotating the wheel-side rotary part (23) about the axis of rotation thereof (27), the swivel angle (ϕ) between the rotary parts (23, 25) is set, and by rotating the axle-side rotary part (25) relative to the axle-side support member (19) the spatial orientation of the angle arrangement consisting of the two rotary parts (23, 25) can be fixed.

16. Wheel suspension according to any of the preceding claims, **characterised in that** the two rotary parts (23, 25) are arranged intemested in one another in the axial direction, the axle-side rotary part (25) in particular being arranged in a cavity (35) of the wheel-side rotary part (23).

## Revendications

1. Suspension de roue pour véhicules automobiles, avec au moins un élément porteur (17) côté roue, supportant en rotation une roue de véhicule (1), et au moins un élément porteur (19) côté essieu, un organe de réglage (21) étant monté entre les éléments porteurs (17, 19) pour le réglage d'un angle de pincement et/ou de carrossage (δ, ε) de la roue de véhicule (1), l'élément porteur (17) côté roue et l'élément porteur (19) côté essieu étant pressés en appui l'un sur l'autre par un moyen de précontrainte (57) avec une force de précontrainte (Fᵥ), **caractérisée en ce que** l'organe de réglage (21) présente une partie de rotation (23) côté roue et une partie de rotation (25) côté essieu qui peuvent tourner l'une par rapport à l'autre autour de leurs axes de rotation (27, 28) situés l'un par rapport à l'autre selon un angle (y) ainsi que par rapport aux éléments porteurs (17, 19), et **en ce que** la partie de rotation (23) côté roue peut être déviée lors de la rotation des deux parties de rotation (23, 25) selon l'angle de pivotement (ϕ) par rapport à la partie de rotation (25) côté essieu, ce qui permet de régler l'angle de pincement et/ou de carrossage (δ, ε) de la roue de véhicule (1).

2. Suspension de roue selon la revendication 1, **caractérisée en ce que** les éléments porteurs (17, 19) et l'organe de réglage (21) sont raccordés mutuellement dans la direction d'action de la force de précontrainte (Fᵥ), en particulier à la façon d'un raccordement par enfichage exempt de contre-dépouille.

3. Suspension de roue selon la revendication 1 ou 2, **caractérisée en ce que**, sur les emplacements de palier entre les éléments porteurs (17, 19) et l'organe de réglage (21), il est prévu des paliers à charge axiale (24) qui reçoivent la force de précontrainte (Fᵥ) du moyen de précontrainte (57), et/ou des paliers radiales (26).

4. Suspension de roue selon la revendication 1, 2 ou 3, **caractérisée en ce que** le moyen de précontrainte (57) est constitué en tant qu'accouplement qui raccorde mutuellement les deux éléments porteurs (17, 19).

5. Suspension de roue selon une des revendications précédentes, **caractérisée en ce que** le moyen de précontrainte (57) est un joint de cardan qui est disposé de préférence radialement à l'extérieur de l'élément intermédiaire (21).

6. Suspension de roue selon la revendication 5, **caractérisée en ce que** le joint de cardan (57) présente un élément de base (63), par exemple un élément annulaire, et des entretoises (65, 66) côté roue et côté essieu qui sont raccordées aux éléments porteurs (17, 19) et qui sont articulées sur l'élément de base (63) par le biais d'axes de rotation (67, 69).

7. Suspension de roue selon la revendication 6, **caractérisée en ce que** les entretoises (65, 66) du joint de cardan (57) sont couplées mutuellement sur les axes de rotation (67, 69) avec formation de la force de précontrainte (Fᵥ).

8. Suspension de roue selon la revendication 6 ou 7, **caractérisée en ce que** les entretoises (65) côté roue et les entretoises (66) côté essieu sont décalées angulairement mutuellement avec formation d'espaces libres (71).

9. Suspension de roue selon une des revendications précédentes, **caractérisée en ce que** les emplacements de palier sont prévus entre les parties de rotation (23, 25) de l'organe de réglage (21) et/ou entre les éléments porteurs (17, 19).

10. Suspension de roue selon une des revendications 4 à 9, **caractérisée en ce que** le moyen de précontrainte (57) est constitué en tant que pont de couple avec lequel en plus un couple, par exemple un couple de freinage, peut être transmis depuis l'élément porteur (17) côté roue vers l'élément porteur (19) côté essieu.

11. Suspension de roue selon une des revendications précédentes, **caractérisée en ce que** le moyen de précontrainte (57) est découplé fonctionnellement de l'organe de réglage (21) ou des parties de rotation (23, 25) de sorte qu'il est éloigné de l'organe de réglage (21) sur une distance libre (a).

12. Suspension de roue selon une des revendications précédentes, **caractérisée en ce que** le moyen de précontrainte (57) est rigide à la déformation ou à la torsion, ce qui permet la déviation de la partie de rotation (23) côté roue selon l'angle de pivotement (ϕ) par rapport à la partie de rotation (25) côté essieu.

13. Suspension de roue selon une des revendications 9 à 12, **caractérisée en ce que** l'axe de rotation (27) de la partie de rotation (23) côté roue est placé en biais selon un angle d'inclinaison (γ) par rapport à l'axe de rotation (28) de la partie de rotation (25) côté essieu.

14. Suspension de roue selon une des revendications précédentes, **caractérisée en ce que** la partie de rotation (23) côté roue avec son axe central (29, 29') peut tourner autour de son axe de rotation (27) dans un mouvement oscillant avec un angle de pivotement (ϕ) variable.

15. Suspension de roue selon une des revendications précédentes, **caractérisée en ce que** la rotation de la partie de rotation (23) côté roue autour de son axe de rotation (27) règle l'angle de pivotement (ϕ) entre les parties de rotation (23, 25), et **en ce que** la rotation de la partie de rotation (25) côté essieu par rapport à l'élément porteur (19) côté essieu peut fixer l'orientation spatiale de l'agencement angulaire composé des deux parties de rotation (23, 25).

16. Suspension de roue selon une des revendications précédentes, **caractérisée en ce que** les deux parties de rotation (23, 25) sont disposées de façon emboîtée l'une dans l'autre dans la direction axiale, la partie de rotation (25) côté essieu en particulier étant disposée dans une cavité (35) de la partie de rotation (23) côté roue.
